# FASCICULE DE BREVET EUROPEEN

(11) **EP 3 636 990 B1**
(45) Date de publication et mention de la délivrance du brevet: **19.06.2024**
(21) Numéro de dépôt: 19212077.2
(22) Date de dépôt: 19.09.2017
(51) Int. Cl.: F21S 41/14, F21S 41/32, F21S 41/26

(54) **DISPOSITIF D'ÉCLAIRAGE POUR VÉHICULE AUTOMOBILE COMPORTANT UN GUIDE DE LUMIÈRE**
BELEUCHTUNGSVORRICHTUNG FÜR KRAFTFAHRZEUG, DIE EINEN LICHTWELLENLEITER UMFASST
LIGHTING DEVICE FOR A MOTOR VEHICLE COMPRISING A LIGHT GUIDE

(30) Priorité: 29.09.2016 FR 1659376
(43) Date de publication de la demande: 15.04.2020
(62) Demande divisionnaire de: 17191738.8
(73) Titulaire: Valeo Vision, 93012 Bobigny Cedex (FR)
(72) Inventeur: COURCIER, Marine, 85774 Unterfoehring (DE); JOERG, Alexandre, 93012 BOBIGNY Cedex (FR)
(74) Mandataire: Valeo Visibility

(56) Documents cités:
- EP-A1- 2 743 567
- EP-A1- 2 871 406
- EP-A2- 2 306 075

## Description

### DOMAINE TECHNIQUE DE L'INVENTION

L'invention concerne un module optique d'éclairage pour véhicule automobile comportant un élément optique primaire comportant :
- une première portion arrière comportant une pluralité de guides de lumière d'axe principal longitudinal agencés selon au moins une rangée transversale, et comportant chacun une face d'extrémité avant de sortie d'un faisceau lumineux secondaire ;
- une portion avant qui présente une face avant commune de sortie des faisceaux lumineux secondaires.

### ARRIERE PLAN TECHNIQUE DE L'INVENTION

On connaît déjà des modules optiques d'éclairage de ce type. Ils sont aptes à émettre longitudinalement vers l'avant un faisceau lumineux final dit "multibeam" ou encore "pixel beam". Le faisceau lumineux final projette vers l'avant une image d'une matrice de sources lumineuses élémentaires. En allumant ou en éteignant sélectivement chacune des sources élémentaires, il est possible de créer un faisceau lumineux final éclairant spécifiquement certaines zones de la route en avant du véhicule, tout en laissant dans l'obscurité d'autres zones.

Un tel module optique d'éclairage est notamment utilisé pour réaliser une fonction d'éclairage adaptatif aussi dite "ADB", acronyme de l'expression anglaise "Adaptative Driving Beam". Une telle fonction ADB est destinée à détecter de façon automatique un usager de la route susceptible d'être ébloui par un faisceau d'éclairage émis en mode feu de route par un projecteur, et à modifier le contour de ce faisceau d'éclairage de manière à créer une zone d'ombre à l'endroit où se trouve l'usager détecté tout en continuant à éclairer la route à grande portée de part et d'autre de l'usager. Les avantages de la fonction ADB sont multiples : confort d'utilisation, meilleure visibilité par rapport à un éclairage en mode feu de croisement, risque d'éblouissement fortement réduit, conduite plus sûre...

Un tel module optique comporte généralement une matrice de sources lumineuses, généralement formées par des diodes électroluminescentes (LEDs), un élément optique primaire comportant une pluralité de guides de lumière et une optique de projection. Les diodes électroluminescentes sont agencées sur une carte à circuit imprimé plane qui s'étend dans un plan orthogonal à la direction de projection du faisceau lumineux final. Les guides de lumière de l'élément optique primaire s'étendent globalement longitudinalement depuis une face d'entrée de la lumière jusqu'à une face de sortie de la lumière. Les guides de lumières sont destinés à conformer les rayons émis par les diodes électroluminescentes en un pinceau lumineux plus étroit, la face de sortie de chaque guide de lumière formant un pixel. Les faces de sorties des guides de lumière forment une matrice de pixels élémentaires imagée par l'optique de projection. Chaque pixel est susceptible d'être éclairé sélectivement par activation ou désactivation de chaque source lumineuse.

Un tel élément optique primaire comporte une première rangée de premiers guides de lumière destinés à former des pixels élémentaires de forme rectangulaire qui sont destinés à éclairer au-dessus d'une ligne de coupure.

Un tel élément optique primaire comporte aussi une deuxième rangée de deuxièmes guides de lumière destinés à former des pixels élémentaires de forme carré qui sont destinés à éclairer au-dessous d'une ligne de coupure.

Les images des pixels carrés éclairent ainsi la route à proximité du véhicule, tandis que les images des pixels rectangulaires éclairent la route à une plus grande distance.

Les images des pixels rectangulaires sont susceptibles d'éblouir des usagers de la route situés à une faible distance du véhicule. L'éclairage adaptatif consiste à détecter de tels usagers de la route et à éteindre les sources lumineuses formant les pixels susceptibles d'éblouir lesdits usagers tout en maintenant les autres sources lumineuses allumées pour garantir une bonne visibilité au conducteur du véhicule.

Pour que le module optique d'éclairage produise un faisceau lumineux final confortable pour le conducteur, les images des pixels rectangulaires chevauchent verticalement les images des pixels carrés. On a constaté que le confort du conducteur était amélioré lorsque les images des pixels rectangulaires s'étendent sur plus de 5° verticalement.

Or, actuellement, un unique guide de lumière ne permet pas d'obtenir un pixel rectangulaire aussi étendu verticalement tout en demeurant relativement étroit transversalement.

En outre, on a aussi constaté qu'un meilleur confort visuel était obtenu lorsque les pixels carrés présentent un bord inférieur estompé.

Par ailleurs, un faisceau lumineux d'éclairage confortable visuellement doit aussi éclairer le bas-côté de la route. Or, même en modifiant la forme des guides de lumières agencés à l'extrémité transversale de l'élément optique primaire, les pixels produits par les guides de lumière d'extrémité transversale ne sont pas suffisamment larges pour éclairer suffisamment le bas-côté de la route.

La demande de brevet EP 2 743 567 A1 décrit un module selon le préambule de la revendication 1.

### BREF RESUME DE L'INVENTION

L'invention a pour but de présenter un module optique d'éclairage permettant de produire un faisceau lumineux à pixels, ou "pixel beam" susceptible d'éclairer confortablement la route.

L'invention concerne ainsi un module optique d'éclairage du type décrit précédemment, la face avant de la portion avant étant conformée pour étaler les faisceaux lumineux secondaires au moins selon une direction verticale, caractérisé en ce que la face de sortie de la portion avant comprend deux tronçons d'extrémités transversales présentant chacun une courbure autour d'un axe vertical pour étaler le faisceau lumineux secondaire émis par les guides de lumière d'extrémité correspondante de chacune de l'au moins une rangée transversale dans une direction transversale.

Selon d'autres caractéristiques de l'invention :
- la face de sortie de la portion avant de l'élément optique primaire présente au moins une bande transversale d'extrémité verticale incurvée autour d'un axe transversal pour étaler les faisceaux lumineux secondaires verticalement émis par une rangée de guides de lumière associée ;
- la face de sortie de la portion avant comporte une bande centrale qui s'étend verticalement entre les deux bandes d'extrémité verticale et qui présente, en coupe verticale longitudinale, une forme rectiligne verticale ;
- un tronçon central de la face de sortie de la portion avant s'étendant entre les deux tronçons d'extrémité transversale présente une forme hémicylindrique ;
- le tronçon central s'étend en vis-à-vis des guides de lumière de chaque rangée à l'exception des deux guides de lumière d'extrémité ;
- chaque diode électroluminescente est associé à un guide de lumière ;
- le module optique est apte à émettre un faisceau lumineux réalisant une fonction d'éclairage adaptatif.

L'invention concerne aussi un dispositif d'éclairage de véhicule automobile comportant le module réalisé selon les enseignements de l'invention.

Le dispositif d'éclairage comporte en outre un module de feu de croisement.

Selon un mode de réalisation non couvert par les revendications, le dispositif d'éclairage comporte au moins deux rangées transversales parallèles de guides de lumière, la face de sortie de la portion avant de l'élément optique primaire présentant deux bandes transversales d'extrémité verticale chacune incurvée autour d'un axe transversal pour étaler les faisceaux lumineux secondaires verticalement émis par une rangée de guides de lumière associée.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente un module optique d'éclairage réalisé selon les enseignements de l'invention ;
- la figure 2 est une vue en perspective qui représente une carte à circuits imprimés du module optique de la figure 1 comportant une matrice de diodes électroluminescentes ;
- la figure 3 est une vue en perspective qui représente l'arrière d'un élément optique primaire du module optique de la figure 1 comportant une pluralité de guides de lumière ;
- la figure 4 est une vue en section selon le plan de coupe 4-4 horizontal de la figure 1 ;
- la figure 5 est une vue en coupe verticale selon le plan de coupe 5-5 de la figure 6 qui représente l'élément optique primaire équipé d'une face avant de sortie convexe apte à étaler les faisceaux lumineux secondaires verticalement ;
- la figure 6 est une vue en coupe transversale selon le plan de coupe 6-6 de la figure 5 qui représente l'élément optique primaire équipé d'une face avant de sortie convexe apte à étaler transversalement les faisceaux lumineux secondaires émis par les guides de lumière d'extrémité de chaque rangée.

### DESCRIPTION DETAILLEE DES FIGURES

Dans la suite de la description, on adoptera à titre non limitatif des orientations :
- longitudinale "L" orientée d'arrière en avant selon l'axe optique de l'optique de projection du module optique ;
- transversale "T" orientée de gauche à droite ;
- verticale "V" orientée de bas en haut.

L'orientation verticale "V" est utilisée à titre de repère géométrique sans rapport avec la direction de la gravité.

Dans la suite de la description, des éléments présentant une structure identique et/ou des fonctions analogues seront désignés par de mêmes références.

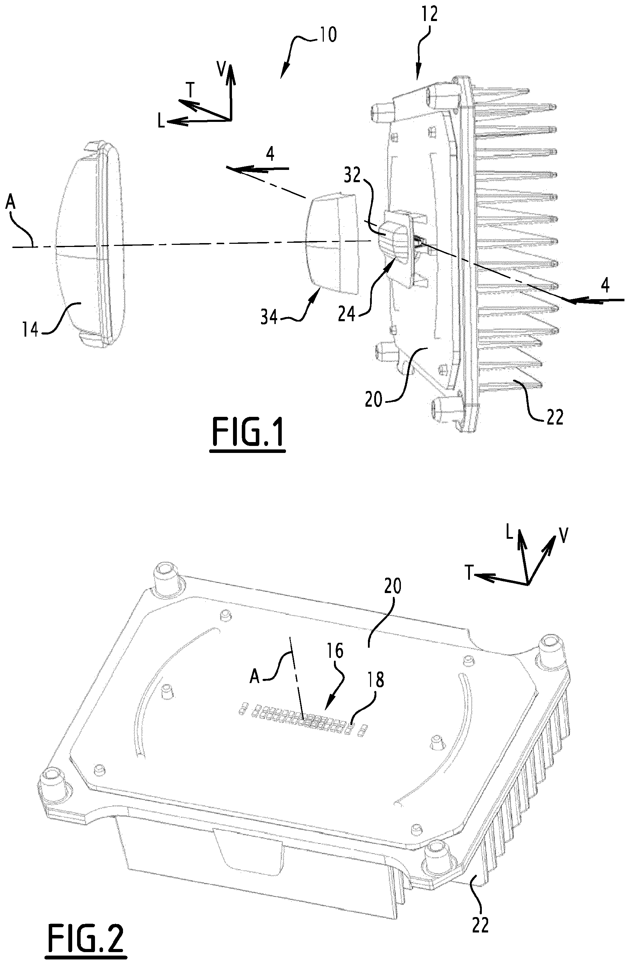

On a représenté à la figure 1 un module optique 10 d'éclairage pour véhicule automobile qui est destiné à émettre un faisceau lumineux final longitudinalement vers l'avant. Il s'agit ici d'un faisceau lumineux adaptatif qui est composé d'une pluralité de faisceaux élémentaires qui se chevauchent. Un tel module optique 10 d'éclairage est notamment apte à remplir une fonction de feu de route adaptatif, aussi connu sous l'appellation "ADB" pour "Adaptative Driving Beam", ou il est aussi apte à remplir une fonction de feu d'éclairage directionnel, aussi connu sous l'appellation "DBL" pour "Dynamic Bending Light".

Le module optique 10 est destiné à équiper un dispositif d'éclairage avant de véhicule automobile. Le dispositif d'éclairage avant comporte en outre un deuxième module optique destiné à émettre un unique faisceau lumineux de croisement à coupure.

Le module optique 10 d'éclairage comporte principalement des moyens 12 d'émission de lumière et une optique 14 de projection qui est agencée longitudinalement en avant et à distance des moyens 12 d'émission. L'optique 14 de projection présente un axe "A" optique longitudinal

Comme représenté à la figure 2, les moyens 12 d'émission de lumière comportent ici une matrice 16 de sources 18 lumineuses élémentaires primaires. Il s'agit ici de diodes 18 électroluminescentes. La matrice 16 est équipée d'au moins deux rangées transversales de dix-sept diodes 18 électroluminescentes, ici de deux rangées. L'axe "A" optique passe sensiblement au milieu de la matrice 16 selon la direction transversale. Toutes les diodes 18 électroluminescentes de la matrice présentent des surfaces éclairantes de dimensions identiques. Il s'agit ici de surfaces éclairantes de forme carré.

La matrice 16 s'étend dans un plan orthogonal à la direction longitudinale "L". Plus particulièrement, les diodes 18 électroluminescentes sont ici portées par la face avant d'une carte 20 à circuits imprimés.

Ces diodes 18 électroluminescentes sont susceptibles d'émettre de la chaleur durant leur fonctionnement. Un puits 22 de chaleur comportant des ailettes de refroidissement est donc accolé au dos de la carte 20 à circuits imprimés pour évacuer la chaleur.

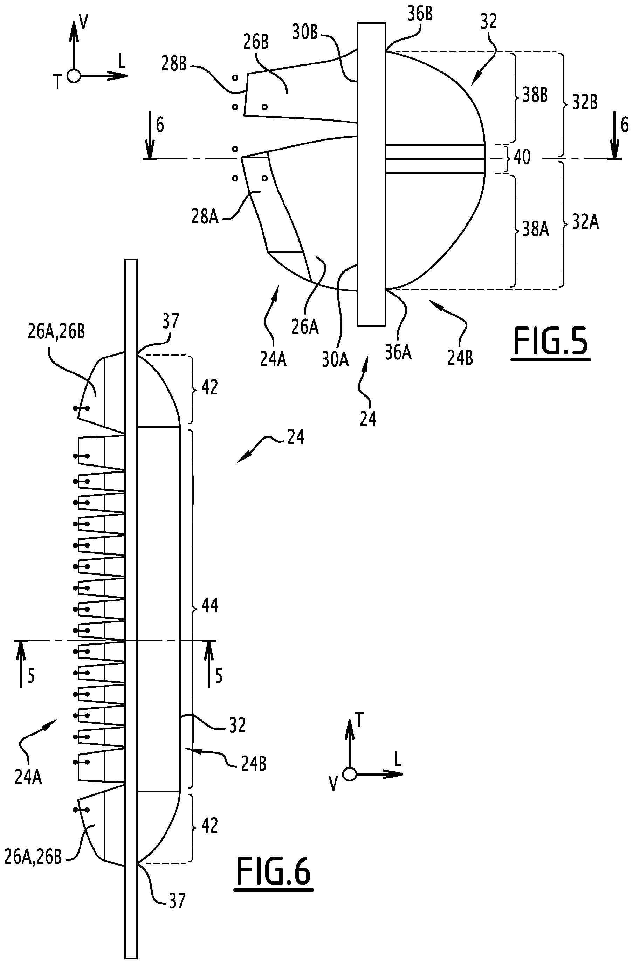

Les diodes 18 électroluminescentes émettent des rayons lumineux dans un cône de lumière très ouverts. Dans l'exemple représenté à la figure 5, l'angle d'ouverture est de 180°. Un élément 24 optique primaire est agencé longitudinalement en avant de la matrice 16 de diodes 18 électroluminescentes pour modifier la distribution des rayons lumineux émis.

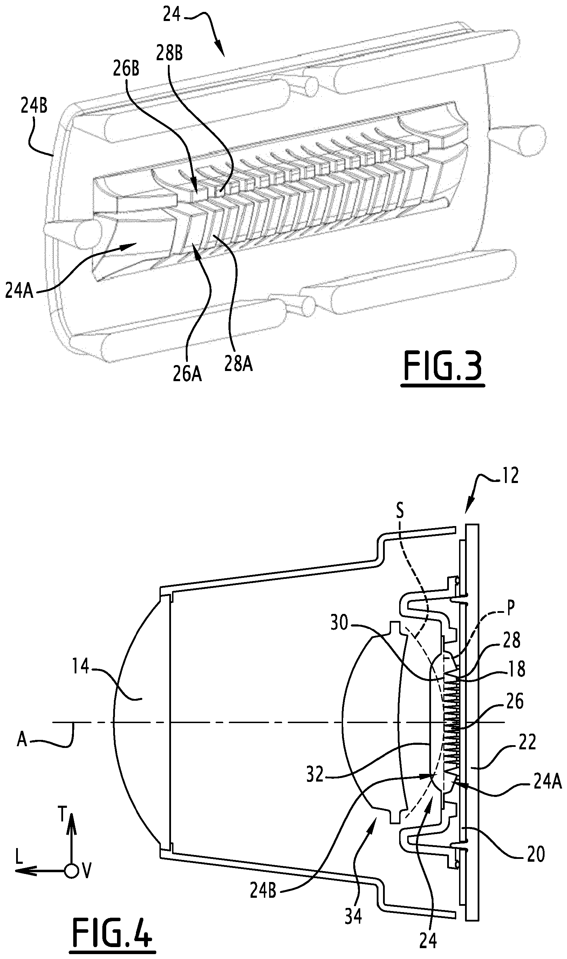

Comme représenté à la figure 3, l'élément 24 optique primaire comporte ici une première portion 24A arrière qui est formée d'une pluralité de guides 26A, 26B de lumière. Chaque guide 26A, 26B de lumière s'étend selon un axe principal longitudinal depuis une face 28A, 28B d'entrée, jusqu'à une face 30A, 30B d'extrémité avant de sortie des rayons lumineux, notamment visible aux figures 4 et 5. Chaque guide 26A, 26B de lumière est conçu pour guider les rayons entrant par la face 28A, 28B d'entrée jusqu'à la face 30A, 30B de sortie. Chaque face 30A, 30B de sortie forme un pixel susceptible d'être allumé sélectivement par commande individuelle de chaque diode 18 électroluminescente.

La portion 24A arrière comporte une matrice comportant au moins autant de guides 26A, 26B de lumière que la matrice 16 comporte de diodes 18 électroluminescentes. Chaque diode 18 électroluminescente est associée à un guide 26A, 26B de lumière. Ainsi, la portion 24A arrière comporte au moins deux rangées de dix-sept guides 26A, 26B de lumière.

Les faces 28A, 28B d'entrée des guides 26A, 26B de lumière sont agencées dans un plan commun qui est parallèlement au plan de la carte 20 à circuits imprimés. Lorsque l'élément 24 optique primaire est agencé dans le module optique 10, chaque face 28A, 28B d'entrée est ainsi positionnée longitudinalement en vis-à-vis et à proximité d'une diode 18 électroluminescente associée, comme cela est illustré à la figure 4, de manière que la majeure partie des rayons lumineux émis par chaque diode 18 électroluminescente entre dans le guide 26A, 26B de lumière associé.

Comme cela est visible à la figure 3, chaque guide 26A, 26B de lumière est susceptible de présenter une section adaptée pour produire un faisceau lumineux élémentaire secondaire sortant de la forme souhaitée pour la fonction du module optique 10 d'éclairage. Chaque faisceau lumineux élémentaire secondaire présente un angle d'ouverture plus restreint que celui de la source 18 lumineuse.

Comme représenté aux figures, l'élément 24 optique primaire comporte deux rangées transversales de guides de lumière. Les guides de lumière de la première rangée inférieure seront désignés par la référence 26A tandis que les guides de lumière de la deuxième rangée supérieure seront désignés par la référence 26B.

Les guides 26A de lumières du premier type, dits par la suite "premiers guides 26A de lumière", occupent la rangée inférieure. Ils sont destinés à former des pixels allongés en hauteur. Plus particulièrement, les pixels allongés présentent une forme globalement rectangulaire dont la longueur s'étend verticalement. A cet effet, la face 30A de sortie des premiers guides 26A de lumière présente une forme rectangulaire correspondante.

Les guides 26B de lumières du deuxième type, dits par la suite "deuxièmes guides 26B de lumière", occupent la rangée supérieure. Ils sont destinés à former des pixels courts en hauteur par rapport aux pixels allongés. Plus particulièrement, les pixels courts présentent une forme globalement carré. A cet effet, la face 30B de sortie des deuxièmes guides 26B de lumière présente une forme carrée correspondante.

Pour chacun des guides 26A, 26B de lumière, la face 30A, 30B de sortie présente un contour de forme similaire à celle de la face 28A, 28B d'entrée. Ainsi, la face 28A d'entrée des premiers guides 26A de lumière présente un contour de forme rectangulaire. De même, la face 28B d'entrée des deuxièmes guides 26B de lumière présente un contour de forme carré.

Comme expliqué en préambule, l'image d'un pixel rectangulaire est destinée à chevaucher verticalement l'image d'un pixel carré. A cet effet, chaque premier guide 26A de lumière est associé à un deuxième guide 26B de lumière parallèle qui est agencé à proximité et au droit du bord supérieur dudit premier guide 26A de lumière associé.

Les faces 30A, 30B de sortie des guides 26A, 26B de lumière sont agencées dans un plan "P" commun d'émission qui est parallèle au plan de la carte 20 à circuits imprimés, comme indiqué à la figure 4. De cette manière, les guides 26A, 26B de lumière présentent tous une longueur identique.

Les faces 30A, 30B de sortie des guides 26A, 26B de lumière forment ainsi une matrice, ici une première rangée de dix-sept faces 30A de sortie de premiers guides 26A de lumière et une deuxième rangée de dix-sept faces 30B de sortie de deuxièmes guides 26B de lumière. Chacune des faces 30A, 30B de sortie est apte à émettre un faisceau élémentaire secondaire selon une direction principale longitudinale de projection depuis le plan "P" commun d'émission orthogonal à la direction longitudinale "L". Les faces 30A, 30B de sortie sont agencées à proximité immédiate les unes des autres, par exemple avec un écart de 0,1 mm.

L'élément 24 optique primaire comporte aussi une portion 24B avant de mise en forme des faisceaux lumineux élémentaires secondaires émis par les sources 30 lumineuses élémentaires.

La portion 24B avant comporte une face 32 d'extrémité avant commune de sortie des rayons lumineux de l'élément optique primaire.

Cette portion 24B avant est ici réalisée venue de matière avec les guides 26A, 26B de lumière de manière que l'élément 24 optique primaire soit réalisé en un bloc.

L'élément 24 optique primaire est par exemple réalisé en silicone, en polycarbonate, en polyméthylméthacrylate (PMMA) ou en tout autre matériau adapté pour la réalisation de guides 26A, 26B de lumière.

En variante, l'élément 24 optique primaire réalisé selon les enseignements de l'invention est réalisé en silicone.

La face 32 avant de sortie de la portion 24B avant est conformée pour étaler les faisceaux lumineux élémentaires secondaires verticalement et/ou horizontalement.

La face 32 avant présente un contour de forme globalement rectangulaire dont la longueur s'étend transversalement, parallèlement aux rangées de guides 26A, 26B de lumière, et dont la largeur s'étend verticalement. La face 32 avant est ainsi délimitée verticalement par un bord transversal inférieur 36A et par un bord transversal supérieur 36B. La face 32 avant peut aussi être délimitée transversalement par deux bords 37 verticaux.

Par la suite, et comme cela est illustré à la figure 5, on distinguera une zone 32A inférieure de la face 32 avant qui est destinée à recevoir les faisceaux lumineux secondaires émis par les guides 26A de lumière de la rangée inférieure, et une zone 32B supérieure de la face 32 avant qui est destinée à recevoir les faisceaux lumineux secondaires émis par les guides 26B de lumière de la rangée supérieure.

Selon un premier aspect de l'invention, la face 32 avant de la portion 24B avant est conformée pour étaler les faisceaux lumineux secondaires au moins selon une direction verticale.

A cet effet, la face 32 de sortie de la portion 24B avant de l'élément optique primaire présente au moins une bande 38A, 38B transversale d'extrémité verticale libre qui est incurvée autour d'un axe transversal pour étaler les faisceaux lumineux secondaires verticalement émis par une rangée de guides 26A, 26B de lumière associée à cette bande 38A, 38B d'extrémité. Ladite bande 38A, 38B transversale d'extrémité de la face 32 de sortie présente ainsi une forme convexe.

Dans l'exemple représenté à la figure 5, l'élément 24 optique primaire comporte deux rangées transversales parallèles de guides 26A, 26B de lumière. Pour permettre l'étalement vertical des faisceaux lumineux émis par les guides 26A, 26B de lumière de chacune de ces deux rangées, deux bandes transversales d'extrémité délimitant verticalement la face 32 de sortie de la portion 24B avant de l'élément optique primaire sont chacune incurvées autour d'un axe transversal pour étaler les faisceaux lumineux secondaires verticalement émis par chaque rangée de guides 26A, 26B de lumière associée.

Plus particulièrement, la zone 32A inférieure présente une bande 38A d'extrémité inférieure bordant le bord 36A inférieur de la face 32 avant. Cette bande 38A d'extrémité inférieure présente une courbure progressive convexe qui est conformée pour étaler les rayons lumineux verticalement de manière à former un faisceau lumineux qui s'étend sur plus de 5° verticalement. A cet effet, en coupe longitudinale verticale, la courbure de la bande 38A d'extrémité inférieure présente une tangente formant un angle globalement inférieur à 45° sur la majorité de la courbure. Ainsi, les rayons lumineux sont légèrement déviés vers le bas par réfraction en passant à travers la bande 38A d'extrémité inférieure. Toutefois, le faisceau lumineux secondaire émis par chacun des guides 26A de lumière associés et sortant par la face 32 présente une limite inférieure relativement nette.

Bien entendu, on comprendra que l'invention n'est pas limitée à cette courbure particulière, et que la courbure pourra être adaptée en fonction de l'étalement souhaité pour les rayons lumineux.

La zone 32B supérieure présente une bande 38B d'extrémité supérieure bordant le bord 36B supérieur de la face 32 avant. Cette bande 38B d'extrémité supérieure présente une courbure convexe dont le rayon de courbure est plus marqué que celui de la bande 38A d'extrémité inférieure de manière que le faisceau lumineux secondaire forme un pixel présentant une limite supérieure floue. A cet effet, en coupe longitudinale verticale, la courbure de la bande 38B d'extrémité supérieure présente une tangente formant un angle globalement supérieur à 45° sur la majorité de la courbure. Ainsi, les rayons lumineux du haut du faisceau lumineux secondaire sont déviés d'un angle très important vers le haut par réfraction en passant à travers la bande 38B d'extrémité supérieure. Ainsi, le faisceau lumineux secondaire émis par chacun des guides 26B de lumière associé et sortant par la face 32 présente une limite supérieure floue.

Pour que les portions de faisceaux lumineux secondaires qui se chevauchent présentent une limite nette, la face 32 de sortie de la portion 24B avant comporte une bande 40 centrale qui s'étend verticalement entre les bandes 38A, 38B d'extrémités supérieure et inférieure. Cette bande 40 centrale présente, en coupe verticale longitudinale, une forme rectiligne.

En variante, la hauteur de la bande centrale peut être adaptée.

Selon une autre variante de l'invention, la face de sortie ne comporte pas de bande centrale. Ainsi, les deux bandes courbées sont reliées directement l'une à l'autre sans interposition d'une bande centrale.

En outre, pour permettre d'étaler transversalement le faisceau lumineux secondaire émis par le guide 26A, 26B de lumière d'extrémité qui est situé du bas-côté de la route pour chaque rangée, au moins un tronçon 42 vertical d'extrémité transversale de la face 32 de sortie de la portion 24B avant présente une courbure autour d'un axe vertical pour étaler le faisceau lumineux secondaire émis par le guide 26A, 26B de lumière d'extrémité correspondante de chacune des rangées dans une direction transversale. Le tronçon 42 vertical présente à cet effet une forme convexe en coupe transversale longitudinale.

Dans l'exemple représenté aux figures, le même élément 24 optique primaire est avantageusement destiné à équiper des véhicules indépendamment du côté de montage, à gauche ou à droite.

Pour permettre d'adapter ainsi un même élément 24 optique primaire aux deux côtés de montage, les deux tronçons 42 verticaux d'extrémités transversales de la face 32 de sortie de la portion 24B avant présentent chacun une courbure autour d'un axe vertical pour étaler le faisceau lumineux secondaire émis par le guide de lumière d'extrémité correspondante de chacune des rangées dans une direction transversale opposée.

En variante, la face de sortie ne comporte qu'un seul tronçon d'extrémité courbe, l'autre tronçon d'extrémité étant supprimé. En se référant à la figure 6, l'une des extrémité 42 du module optique est alors supprimée. Le module optique comporte ainsi une face de sortie asymétrique par rapport à un plan médian longitudinal vertical. Dans ce cas, un module optique primaire différent est agencé de chaque côté du véhicule.

Les bandes 38A, 38B d'extrémité verticale chevauchent les tronçons 42 d'extrémités transversales. Ainsi, les deux tronçons 42 d'extrémité présentent simultanément des courbures aussi bien autour d'un axe transversal qu'autour d'un axe vertical. En d'autres termes, les tronçons 42 d'extrémités transversales présentent une forme sphéroïdale. De cette manière les faisceaux lumineux secondaires émis par les guides 26A, 26B de lumière d'extrémité sont étalés verticalement et transversalement, de sorte à former une distribution lumineuse en forme de voile.

Au contraire, les faisceaux lumineux secondaires émis par les autres guides 26A, 26B de lumière sont destinés à être étalés uniquement dans une direction verticale par la face 32 de sortie. Un tronçon 44 central de la face de sortie s'étend en vis-à-vis des guides 26A, 26B de lumière de chaque rangée à l'exception des deux guides de lumière d'extrémité. A cet égard, le tronçon 44 central de la face 32 de sortie de la portion 24B avant, s'étendant entre les deux tronçons 42 d'extrémité transversale, présente une forme hémicylindrique. Par hémicylindrique, on comprendra que le tronçon 44 central de face 32 de sortie avant est généré par déplacement d'une droite transversale le long d'une courbe ouverte formée par le profil vertical des trois bandes 38A, 38B, 40 transversales, comme représenté à la figure 5. La face 32 de sortie présente ainsi un aspect lisse. En variante non représentée, la face de sortie peut aussi être grainée par parties.

Par ailleurs, l'optique 14 de projection est agencée longitudinalement à distance en avant du plan "P" d'émission. L'optique 14 de projection est apte à projeter une image des faces 30A, 30B de sortie vers l'infini pour former le faisceau lumineux final. En projection sur un écran vertical transversal (non représenté) situé à grande distance, par exemple à 25 m, chaque face 30A, 30B de sortie illuminée permet d'éclairer une zone de l'écran. Les zones se chevauchent légèrement de manière à éclairer de manière homogène. Chaque diode 18 est commandée individuellement de manière à pouvoir éclairer sélectivement chacune des zones de l'écran.

L'optique 14 de projection est ici réalisée en un seul bloc.

De manière connue, l'optique 14 de projection comporte une surface focale objet "S" qui s'étend globalement orthogonalement à l'axe "A" optique qu'elle coupe au niveau du foyer objet.

Pour que le faisceau final obtenu présente des caractéristiques lumineuses souhaitées pour son utilisation, il est nécessaire que les faces 30A, 30B de sortie soient imagées de manière sensiblement nette. A cet effet, chaque source 30 lumineuse élémentaire doit être située sur la surface focale objet de l'optique 14 de projection.

Théoriquement, l'optique 14 de projection est censée présenter une surface focale objet plane et parfaitement orthogonale à l'axe "A" optique. Cependant, dans la réalité, il est connu que l'optique 14 de projection présente une surface focale objet ayant un défaut de courbure sphérique concave. Un tel défaut est appelé aberration de champ de Petzval.

Pour permettre de focaliser correctement l'optique 14 de projection sur les sources 30 de lumière élémentaires, un élément 34 optique secondaire de correction de champ est interposé entre le plan "P" d'émission et l'optique 14 de projection. Cet élément 34 optique de correction de champ est spécifiquement conçu pour corriger l'aberration de courbure de champ de l'optique 14 de projection. L'élément 34 optique de correction de champ est formé par au moins une lentille de correction de champ aussi connue sous sa dénomination anglaise de "field flattener lens". Dans l'exemple représenté aux figures, l'élément 34 optique de correction de champ comporte une unique lentille de correction de champ qui sera donc référencée 34.

On notera que les faces 28A, 28B d'entrée des deux guides de lumière 26A, 26B situés aux extrémités latérales ne sont pas agencées dans un même plan transversal vertical. Les faces 28A, 28B sont par exemple agencées en éventail autour des diodes électroluminescentes. Ceci permet de participer à l'étalement du faisceau selon la direction transversale.

## Revendications

1. Module optique (10) d'éclairage pour véhicule automobile comportant un élément (24) optique primaire comportant :
- une première portion (24A) arrière comportant une pluralité de guides (26A, 26B) de lumière d'axe principal longitudinal agencés selon au moins une rangée transversale, et comportant chacun une face (30A, 30B) d'extrémité avant de sortie d'un faisceau lumineux secondaire ;
- une portion (24B) avant qui présente une face (32) avant commune de sortie des faisceau lumineux secondaires, la face (32) avant de la portion (24B) avant étant conformée pour étaler les faisceaux lumineux secondaires au moins selon une direction verticale ;
le module optique étant **caractérisé en ce que** la face (32) de sortie de la portion avant comprend deux tronçons (42) d'extrémités transversales présentant chacun une courbure autour d'un axe vertical pour étaler le faisceau lumineux secondaire émis par les guides (26A ; 26B) de lumière d'extrémité correspondante de chacune de l'au moins une rangée transversale dans une direction transversale.

2. Module optique (10) selon la revendication précédente, **caractérisé en ce que** la face (32) de sortie de la portion (24B) avant de l'élément (24) optique primaire présente au moins une bande (38A, 38B) transversale d'extrémité verticale incurvée autour d'un axe transversal pour étaler les faisceaux lumineux secondaires verticalement émis par une rangée de guides (26A, 26B) de lumière associée.

3. Module optique (10) selon la revendication 2, **caractérisé en ce que** la face (32) de sortie de la portion (24B) avant comporte une bande (40) centrale qui s'étend verticalement entre les deux bandes (38A, 38B) d'extrémité verticale et qui présente, en coupe verticale longitudinale, une forme rectiligne verticale.

4. Module optique (10) selon l'une quelconque des revendications précédentes, **caractérisé en ce qu'**un tronçon (44) central de la face (32) de sortie de la portion (24B) avant s'étendant entre les deux tronçons (42) d'extrémité transversale présente une forme hémicylindrique.

5. Module optique (10) selon la revendication précédente, **caractérisé en ce que** le tronçon (44) central s'étend en vis-à-vis des guides (26A, 26B) de lumière de chaque rangée à l'exception des deux guides (26A, 26B) de lumière d'extrémité.

6. Module optique (10) selon l'une quelconque des revendications précédentes, **caractérisé en ce que** chaque diode (18) électroluminescente est associée à un guide (26A, 26B) de lumière.

7. Module optique (10) selon l'une quelconque des revendications précédentes, **caractérisé en ce qu'**il est apte à émettre un faisceau lumineux réalisant une fonction d'éclairage adaptatif.

8. Dispositif d'éclairage de véhicule automobile comportant le module réalisé selon l'une quelconque des revendications 1 à 7.

9. Dispositif d'éclairage selon la revendication 8, **caractérisé en ce que** le dispositif d'éclairage comporte en outre un module de feu de croisement.

## Patentansprüche

1. Optisches Modul (10) zur Beleuchtung für ein Kraftfahrzeug, umfassend ein primäres optisches Element (24), umfassend:
- einen ersten hinteren Bereich (24A), der eine Mehrzahl von Lichtleitern (26A, 26B) mit Längshauptachse umfasst, die entlang mindestens einer Querreihe angeordnet sind und jeweils eine vordere Austrittsendfläche (30A, 30B) für ein sekundäres Lichtbündel umfassen;
- einen vorderen Bereich (24B), der eine gemeinsame vordere Austrittsfläche (32) für die sekundären Lichtbündel aufweist, wobei die vordere Fläche (32) des vorderen Bereichs (24B) dazu ausgebildet ist, die sekundären Lichtbündel mindestens entlang einer vertikalen Richtung auszubreiten;
wobei das optische Modul **dadurch gekennzeichnet ist, dass** die Austrittsfläche (32) des vorderen Bereichs zwei Querendabschnitte (42) umfasst, die jeweils eine Krümmung um eine vertikale Achse aufweisen, um das sekundäre Lichtbündel auszubreiten, das von den Lichtleitern (26A; 26B) des entsprechenden Endes jeder der mindestens einen Querreihe in einer Querrichtung ausgesendet wird.

2. Optisches Modul (10) nach dem vorhergehenden Anspruch, **dadurch gekennzeichnet, dass** die Austrittsfläche (32) des vorderen Bereichs (24B) des primären optischen Elements (24) mindestens einen Querstreifen eines vertikalen Endes aufweist, der um eine Querachse gekrümmt ist, um die sekundären Lichtbündel vertikal zu verbreiten, die von einer zugeordneten Reihe von Lichtleitern (26A, 26B) ausgesendet werden.

3. Optisches Modul (10) nach Anspruch 2, **dadurch gekennzeichnet, dass** die Austrittsfläche (32) des vorderen Bereichs (24B) einen mittleren Streifen (40) umfasst, der sich vertikal zwischen den beiden Streifen (38A, 38B) eines vertikalen Endes erstreckt und der, im vertikalen Längsschnitt, eine vertikale geradlinige Form aufweist.

4. Optisches Modul (10) nach einem der vorhergehenden Ansprüche, **dadurch gekennzeichnet, dass** ein mittlerer Abschnitt (44) der Austrittsfläche (32) des vorderen Bereichs (24B), der sich zwischen den beiden Abschnitten (42) eines Querendes erstreckt, eine halbzylindrische Form aufweist.

5. Optisches Modul (10) nach dem vorhergehenden Anspruch, **dadurch gekennzeichnet, dass** sich der mittlere Abschnitt (44) gegenüber den Lichtleitern (26A, 26B) jeder Reihe mit Ausnahme der beiden Endlichtleiter (26A, 26B) erstreckt.

6. Optisches Modul (10) nach einem der vorhergehenden Ansprüche, **dadurch gekennzeichnet, dass** jede Leuchtdiode (18) einem Lichtleiter (26A, 26B) zugeordnet ist.

7. Optisches Modul (10) nach einem der vorhergehenden Ansprüche, **dadurch gekennzeichnet, dass** es in der Lage ist, ein Lichtbündel auszusenden, das eine Funktion zur adaptiven Beleuchtung ausführt.

8. Beleuchtungsvorrichtung für ein Kraftfahrzeug, die das nach einem der Ansprüche 1 bis 7 ausgeführte Modul umfasst.

9. Beleuchtungsvorrichtung nach Anspruch 8, **dadurch gekennzeichnet, dass** die Beleuchtungsvorrichtung ferner ein Abblendlichtmodul umfasst.

## Claims

1. Optical lighting module (10) for a motor vehicle comprising a primary optical element (24) comprising:
- a first rear portion (24A) comprising a plurality of light guides (26A, 26B) of longitudinal main axis arranged along at least one transverse row, and each comprising an output front end face (30A, 30B) for a secondary light beam;
- a front portion (24B) which has a common output front face (32) for the secondary light beams, the front face (32) of the front portion (24B) being conformed to spread the secondary light beams at least in a vertical direction;
the optical module being **characterized in that** the output face (32) of the front portion comprises two transverse end sections (42) each having a curvature about a vertical axis to spread the secondary light beam emitted by the corresponding end light guides (26An, 26B) of each of the at least one transvers row in a transverse direction.

2. Optical module (10) according to the preceding claim, **characterized in that** the output face (32) of the front portion (24B) of the primary optical element (24) has at least one transverse vertical end strip (38A, 38B) incurved about a transverse axis to spread the secondary light beams vertically emitted by an associated row of light guides (26A, 26B).

3. Optical module (10) according to claim 2, **characterized in that** the output face (32) of the front portion (24B) comprises a central strip (40) which extends vertically between the two vertical end strips (38A, 38B) and which has, in longitudinal vertical cross section, a vertical rectilinear form.

4. Optical module (10) according to any one of the preceding claims, **characterized in that** a central section (44) of the output face (32) of the front portion (24B) extending between the two transverse end sections (42) has a hemicylindrical form.

5. Optical module (10) according to the preceding claim, **characterized in that** the central section (44) extends opposite the light guides (26A, 26B) of each row except for the two end light guides (26A, 26B).

6. Optical module (10) according to any one of the preceding claims, **characterized in that** each light-emitting diode (18) is associated with a light guide (26A, 26B).

7. Optical module (10) according to any one of the preceding claims, **characterized in that** it is capable of emitting a light beam producing an adaptive lighting function.

8. Motor vehicle lighting device comprising the module produced according to any one of Claims 1 to 7.

9. Lighting device according to Claim 8, **characterized in that** the lighting device further comprises a low beam module.
